Europäisches Patentamt

(19) European Patent Office

Office européen des brevets

(11) Publication number: **0 010 909**
A1

(12) **EUROPEAN PATENT APPLICATION**

(21) Application number: **79302282.3**

(22) Date of filing: **19.10.79**

(51) Int. Cl.³: **G 11 B 3/58**

(30) Priority: **20.10.78 GB 7841455**

(71) Applicant: **TANTRACK LIMITED, 7 Kiln Lane, Brockham, Betchworth, Surrey RH3 7LX (GB)**

(43) Date of publication of application: **14.05.80 Bulletin 80/10**

(72) Inventor: **Harding, John Graham, 23 South Street, Dorking, Surrey (GB)**

(84) Designated Contracting States: **AT BE CH DE FR GB IT LU NL SE**

(74) Representative: **Boydell, John Christopher et al, Stevens, Hewlett & Perkins 5 Quality Court Chancery Lane, London, WC2 1HZ (GB)**

(54) **Device for cleaning gramophone records.**

(57) A device for cleaning gramophone records comprising a heavy disc (1) which rests on a gramophone deck (not shown) and an L-shaped rod (3) extending therefrom across the deck turntable. A wire frame (7) is slidably and hingedly supported from arm (3) and holds a record cleaning brush (8). In operation, the brush/frame assembly (7/8) is placed on the arm (3) over a record to be cleaned so that brush tracks with the record grooves and cleans the record during playing.

EP 0 010 909 A1

- 1 -                                    JCB/5136
"Device for cleaning gramophone records"

This invention relates to a device for cleaning gramophone records.

Record cleaning devices are known which comprise a small fabric-covered cylindrical roller attached to a pivotable arm which is placed on the record during playing and pivots in an arc across the record to thereby pick up dust and other debris from the record surface.   The use of such devices is preferred to the process of simply wiping the record prior to playing with a cloth or similar appliance since the roller can be arranged so that the time interval between the cleaning of the record and its playing is very short.   Also, handling of the fragile record by the user is reduced.

The present invention is thus concerned with a record cleaning device of the type which comprises a brush, for example in the form of a small cylindrical roller, which tracks tangentially across the record during playing, but the manner in which the brush is mounted is altered over known devices to enable a simpler, more effective, and more aesthetically attractive device to be produced.

According to the invention there is provided a device for cleaning gramophone records, which device comprises a base member which may be placed to one side of a gramophone turntable, an arm extending from said base member in a plane parallel to the plane of the turntable, said arm being supported solely by the base member, a record cleaning brush for cleaning a record on said turntable during rotation thereof, and means for slidably supporting said brush on the arm in such a manner that, during use, the brush rests by gravity on the record surface.

In order to use the device the arm is placed so that it extends approximately radially across the turntable onto which a record to be cleaned has previously been placed. The brush is placed by hand on the edge of the record so that, during rotation, the ability of the brush to slide on the arm enables the brush to track, with the record grooves, across the record, thus cleaning the same.

Preferably the brush takes the form of a fabric-covered cylindrical roller whose axis, when in use, is parallel to the axis of the arm. Preferably also the base member supports the arm solely by virtue of its weight, no adhesive or other fixing means being necessary to support the device. The device can thus readily be moved about relative to the turntable, and can be transferred from turntable to turntable without damage either to the turntable, or to the device itself.

The brush supporting means may comprise a support member which, at one end, is hingedly connected to the arm in such a way as to permit sliding and, at the other end, is attached to said brush. Although not essential, it is preferred that the hinge connection of the support member to the arm is such that the brush can be readily removed from the arm for cleaning.

In order that the invention may be better understood, an embodiment thereof will now be described by way of example only and with reference to the accompanying drawings in which:-

Figure 1 is a perspective view of an embodiment of a gramophone record cleaning device in accordance with the present invention;

Figure 2 is a side view of the record cleaning device of Figure 1 shown positioned on a gramophone record deck;

and

Figure 3 is an enlarged perspective view of part of the record cleaning device of Figure 1.

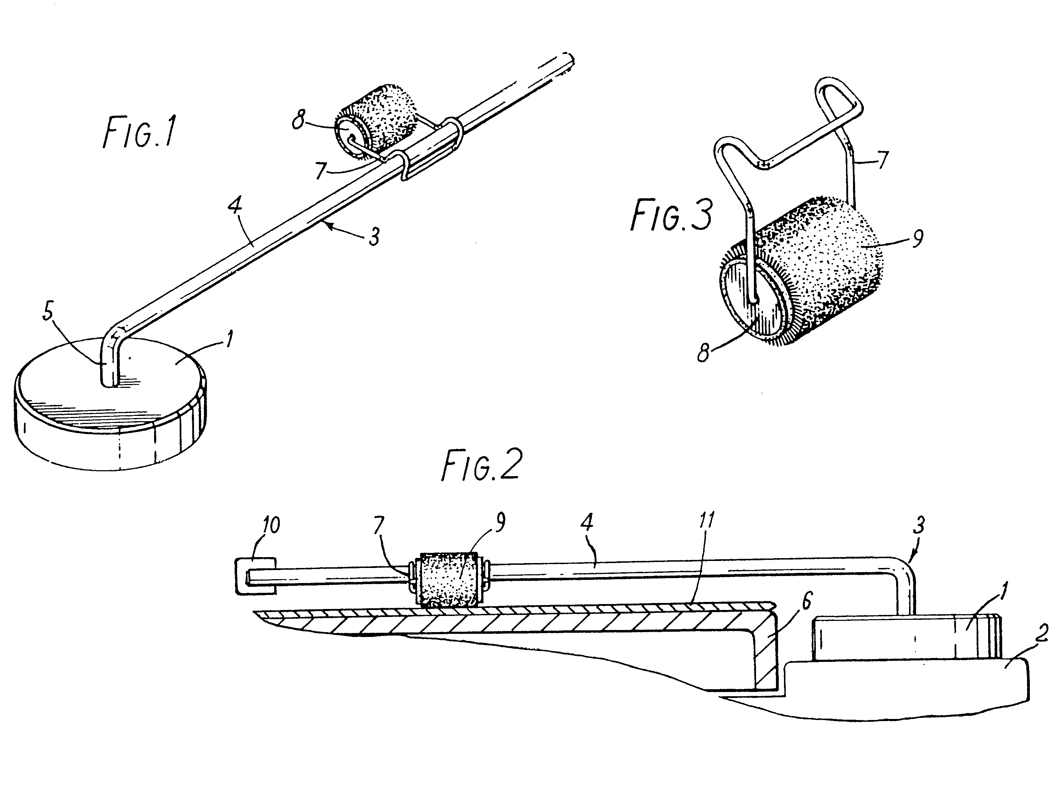

Referring to the drawings, the device comprises a base member on the form of a disc 1 of metallic material. The underside of the disc 1 is covered with felt or similar material to prevent damage to the gramophone deck, partly shown in Figure 2 under reference 2, and to prevent slipping of the device on the deck.

An arm in the form of an L-shaped circular-section rod 3 extends from the upper surface of the disc 1 and, when in position, extends parallel to the plane of the turntable 6, as shown in Figure 2. The arm comprises two portions: a first portion 4 whose length is dictated by the standard diameter of commerically-available turntables; and a second portion 5 whose length is dependent upon the height of the turntable, shown under reference 6, above the remainder of the record deck 2. It is envisaged that the arm 3 will be readily removable from the disc 1 to enable arms having different dimensions to be accommodated, thus enabling the device to be usable with different decks. In particular, the length of portion 5 will differ from deck to deck. In order to enable removal of the arm, the rod 3 is a force fit or threaded fit into a centrally located aperture in the disc 1.

Slidably supported on the portion 4 of the rod 3 is a wire frame 7 which is bent as shown in detail in Figure 3, to define a notional channel into which the rod 3 may fit. The frame 7 is thus hingedly connectible to rod 3, but is able to slide along the rod and to be readily removable from the rod. The frame itself supports a brush in the form of a cylindrical roller 8 which is covered in fabric 9. The roller 8 is rotatable on the frame 7 so that a new area of fabric may be presented occasionally, in order to even out wear. However a sufficient degree of friction is present in the rotatable connection between roller 8 and frame 7 to prevent the roller from rotating during the cleaning operation. An end cap 10, for example of plastics material may be fitted over the end of the portion 4 of the rod 3 to prevent the frame and roller assembly 7/9 from sliding off the end of the arm if incorrectly positioned.

In order to use the device, the disc 1 is placed on the record deck 2 to one side of turntable 6. After positioning a record to be cleaned, shown under reference 11, on the turntable 6, the assembly comprising the disc 1 and arm 3 is placed such that the portion 4 of the arm extends approximately radially across the turntable above the record. The assembly comprising the frame 7 and roller 8 is then hooked over the portion 4 of the arm 3 in such a way that the roller 8 rests on the outer edge of the record. The fabric covering 9 is such as to catch in the grooves of the record so that, as the record rotates, the fabric, and hence the roller 8 follows the grooves and tracks in a tangential manner across the record. Figure 2 shows the device in use, and about two-thirds of the way through cleaning the record 11. When cleaning of the record is complete, the frame 7 and roller 8 are removed, and the fabric 9 cleaned by means of a small bristled brush (not shown). The arm 3 is then rotated out of the way of the turntable 6 so that the record can be removed.

The disc 1 is made of solid metal, for example steel, and so is of sufficient weight to be able to support the remaining parts of the device without any additional assistance. Unlike several devices presently on the market, the roller reliably tracks across the record, either during or separate from playing, without skating, and is thus very effective in picking up dust from the record surface. In addition, the device can be readily adapted to turntables of different heights above the deck 2. The pivotting action of the frame and roller assembly 7/9 enables the device to be used with turntables lower than shown, although the position shown in Figure 2 represents just about the maximum height of turntable which can realistically be accommodated with the particular arm 3 shown. If the turntable is higher than shown, then an arm 3 having a longer portion 5 can replace that shown, and it is anticipated that different height arms will be readily available from retail outlets.

0010909

Alternatively the device as originally sold may be supplied with two or more different height arms to accommodate diffeerent turntable heights.

CLAIMS

1        A device for cleaning gramophone records, which device comprises a base member which may be placed to one side of a gramophone turntable, an arm extending from said base member in a plane parallel to the plane of a turntable, said arm being supported solely by the base member, a record cleaning brush for cleaning a record on said turntable during rotation thereof, and means for slidably supporting said brush on the arm in such a manner that, during use, the brush rests by gravity on the record surface.

2        A device as claimed in claim 1 wherein the brush takes the form of a fabric-covered cylindrical roller whose axis, when in use, is parallel to the axis of the arm.

3        A device as claimed in either one of claims 1 or 2 wherein the weight of the base member is sufficient to support the arm and brush without additional fixing means being employed.

4        A device as claimed in any one of claims 1 to 3 wherein the brush supporting means comprises a support member which, at one end, is hingedly connected to the arm in such a way as to permit sliding and, at the other end, is attached to said brush.

5        A device as claimed in claim 4 wherein the support member comprises a wire frame bent to form a channel whereby the support member may be hingedly supported on the arm, the brush being supported on said wire frame.

6        A device for cleaning gramophone records, substantially as hereinbefore described with reference to the accompanying drawings.

0010909

FIG.1

FIG.2

FIG.3

| | DOCUMENTS CONSIDERED TO·BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | <u>DE - A1 - 2 710 545</u> (METROSOUND AUDIO PRODUCTS LTD.)<br>* claim 1, page 5; fig. 1 *<br>--<br><u>DE - A1 - 2 650 004</u> (LENCO AG)<br>* claim 1; fig. 1 *<br>--<br><u>DE - A1 - 2 649 784</u> (BIB HI-FI ACCES-SORIES LTD.)<br>* claim 1; fig. 1 *<br>---- | 1-4<br><br>1,2,<br>4<br><br>1 | G 11 B   3/58 |

**TECHNICAL FIELDS SEARCHED (Int.Cl.³)**

G 11 B   3/58
G 11 B   23/50

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

| | | | |
|---|---|---|---|
| X | The present search report has been drawn up for all claims | | |
| Place of search<br>Berlin | Date of completion of the search<br>24-01-1980 | Examiner<br>LEITHÄUSER | |

EPO Form 1503.1   06.78